# EUROPÄISCHE PATENTSCHRIFT

(11) **EP 3 781 464 B1**
(45) Veröffentlichungstag und Bekanntmachung des Hinweises auf die Patenterteilung: **01.06.2022**
(21) Anmeldenummer: 19718648.9
(22) Anmeldetag: 12.04.2019
(51) Int. Cl.: B62D 65/18, B62D 53/00

(54) **FÖRDERANLAGE MIT EINEM FÖRDERWAGEN**
CONVEYOR SYSTEM HAVING A CONVEYOR CARRIAGE
INSTALLATION DE CONVOYAGE AVEC UN CHARIOT DE CONVOYAGE

(30) Priorität: 20.04.2018 DE 102018109584
(43) Veröffentlichungstag der Anmeldung: 24.02.2021
(73) Patentinhaber: pentanova cs GmbH, 71032 Böblingen (DE)
(72) Erfinder: RIEGRAF, Martin, 72766 Reutlingen (DE)
(74) Vertreter: Ostertag & Partner Patentanwälte mbB
(86) Internationale Anmeldenummer: PCT/EP2019/059523
(87) Internationale Veröffentlichungsnummer: WO 2019/201797

(56) Entgegenhaltungen:
- EP-A2- 1 980 474
- EP-B1- 1 980 474
- DE-A1- 10 008 767
- DE-A1-102005 034 582
- DE-A1-102015 003 736
- US-A- 5 013 203
- US-A1- 2013 015 039

## Beschreibung

### HINTERGRUND DER ERFINDUNG

### 1. Gebiet der Erfindung

Die Erfindung betrifft eine Förderanlage mit
a) einer Förderstrecke und
b) mindestens einem Förderwagen, der einen eigenen Antrieb mitführt und mit diesem entlang der Förderstrecke bewegbar ist, wobei der Antrieb
   - einen Antriebsmotor, und
   - eine Trenneinrichtung umfasst, mit welcher sich der Kraftfluss zwischen dem Antriebsmotor und der Förderstrecke trennen lässt.

Die Erfindung betrifft ferner einen Förderwagen für eine solche Förderanlage sowie ein Verfahren zum Entfernen eines liegengebliebenen Förderwagens aus einem schwer zugänglichen Förderstreckenabschnitt einer Förderanlage

### 2. Beschreibung des Standes der Technik

In Förderanlagen, bei welchen Förderwagen mit eigenem, mitgeführten Antrieb zum Einsatz kommen, mit welchem die Förderwagen sich mehr oder weniger selbsttägig entlang einer ortfesten Förderstrecke bewegen, können Störungen an einem einzelnen Förderwagen auftreten, durch die der Förderwagen in irgendeinem Abschnitt der Förderstrecke stehen bleibt. Dies führt selbstverständlich zu einer Stauung der nachfolgenden Förderwagen auf der Förderstrecke, sodass die Störung möglichst umgehend beseitigt werden muss.

In der Regel resultieren derartige Störungen, die zu einem vollständigen Bewegungsausfall eines Förderwagens führen, aus einem Problem mit den Komponenten des Antriebs. Insbesondere fallen beim Antrieb häufig elektronische Bauteile, wie beispielsweise Sensoren, der Antriebssteuerungen aus. Der mechanische Teil des Antriebs wie beispielsweise ein Antriebsrad des Fahrwerks oder ein Zahnrad eines Getriebes ist im Normalfall nicht für den Ausfall verantwortlich.

Um einen solchen Förderwagen, bei welchem der Antrieb ausgefallen ist, aus der Förderstrecke herauszuführen, umfasst der Antrieb zwischen einem Antriebsmotor und einem Antriebsrad bisher eine Kupplung, meist zusammen mit einem ohnehin notwendigen Getriebe, mit welchem sich der Kraftfluss zwischen dem Antriebsmotor und dem Antriebsrad trennen lässt. Das Bedienpersonal kann dann den Förderwagen durch äußere Krafteinwirkung händisch entlang der Förderstrecke auf einen Wartungsabschnitt bewegen, sodass die Förderanlage insgesamt ohne den ausgefallenen Förderwagen wieder in Betrieb genommen werden kann. Die Kupplung ermöglicht somit nach Trennen des Kraftflusses eine Bewegung des Förderwagens auch wenn der Antriebsmotor stromlos ist, wodurch dieser als eine mechanische Bremse die Bewegung des Förderwagens blockiert.

Eine Aktivierung der Kupplung erfolgt dabei bisher händisch durch Betätigen eines Hebels an einem Getriebegehäuse, welches auch die Kupplung umfasst. Diese Betätigung der Kupplung kann durch Bedienpersonal mit der Hand oder einer Betätigungsstange am Ort des Ausfalls des Förderwagens entlang der Förderstrecke erfolgen.

Darüber hinaus ist auch bekannt, derartige Kupplungen durch stationär angeordnete Kulissenführungen, die auf den Hebel der Kupplung wirken, zu betätigen. Dies ist beispielsweise notwendig, wenn die Position des Förderwagens über eine externe Positioniereinheit beispielsweise in einem Hubtisch oder ähnlichem bestimmt werden soll. Beim Verlassen eines solchen Abschnitts wird mit einer komplementären Kulissenführung der Kraftfluss wiederhergestellt.

Die oben für den Störungsfall erläuterte händische Betätigung funktioniert in vielen Bereichen entlang der Förderstrecke gut, sofern die Kupplung in diesen Bereichen durch das Bedienpersonal problemlos erreichbar ist und der Förderwagen in diesen Bereichen durch die Kraft des Bedienpersonals bewegt werden kann.

Problematisch sind jedoch Bereiche entlang der Förderstrecke, in welchen eine Betätigung der Kupplung durch Bedienpersonal nicht oder nur durch Inkaufnahme einer Gefährdung des Bedienpersonals möglich ist. Solche Bereiche sind beispielsweise Förderstreckenabschnitte über Bodenöffnungen, Bereiche in engen Gehäusen und/oder Bereiche mit einer gesundheitsgefährdenden Umgebung (Dämpfe, Temperatur, Lärm, Druck, Dunkelheit, usw.). Derartig schwer zugängliche Förderstreckenabschnitte finden sich in Oberflächenbehandlungsanlagen beispielsweise in Form von Trocknern, Lackierstrecken, Montagelinien und/oder Pufferstrecken.

Die DE 10 2005 034582 A1 beschreibt eine Förderanlage, bei welcher Fahrzeuge im Verband angetrieben werden, um einen gleichzeitigen und sicheren Transport von Werkstücken und Monteuren zu ermöglichen. Damit sich die Fahrzeuge im Falle eines Versagens eines ihrer Antriebe nicht voneinander lösen und somit auch im Störfall ein ausreichendes Maß an Sicherheit für die Monteure gewährleistet ist, weisen die Fahrzeuge selbsttätig beim Auffahren miteinander verrastende Kupplungen auf. Um den Kraftfluss zu trennen und ein liegengebliebenes Fahrzeug zu entfernen, muss das Bedienpersonal aber dennoch in oben erläuterter Weise manuell die Kupplung bedienen.

### ZUSAMMENFASSUNG DER ERFINDUNG

Es ist daher Aufgabe der Erfindung, eine Förderanlage eingangs genannter Art dahingehend zu verbessern, dass aufgrund einer Störung liegengebliebene Förderwagen aus schwer zugänglichen Förderstreckenabschnitten leichter entfernt werden können.

Aufgabe der Erfindung ist es, auch einen Förderwagen entsprechend weiterzubilden sowie ein zugehöriges Verfahren anzugeben.

Erfindungsgemäß wird dies durch eine Förderanlage eingangs genannter Art erreicht, bei der
c) die Trenneinrichtung dazu eingerichtet ist, von einem dem Förderwagen entlang der Förderstrecke nachfolgenden und/oder einem dem Förderwagen entlang der Förderstrecke vorauslaufenden Trennwagen aktiviert zu werden, um den Kraftfluss zwischen dem Antriebsmotor des mindestens einen Förderwagens und der Förderstrecke zu trennen.

Der Erfinder hat erkannt, dass es nicht zwingend notwendig ist, dass sich das Bedienpersonal in die schwer zugänglichen Förderstreckenabschnitt begibt, um dort liegengebliebene Förderwagen in einem Störungsfall händisch aus diesem Bereich herauszubewegen. Stattdessen ist es sinnvoll, die Trenneinrichtung derart auszugestalten, dass die Trennung des Kraftflusses zwischen dem Antriebsmotor und der Förderstrecke von einem anderen Wagen, der sich entlang der Förderstrecke bewegen kann, dem sogenannten Trennwagen, aktiviert werden kann.

Auf diese Weise nutzt man die ohnehin vorhandene Förderstrecke, um in den Bereich der Förderstrecke zu gelangen, in welchem sich der liegengebliebene Förderwagen befindet. Die ortsfeste Förderstrecke kann beispielsweise eine Fahrschiene einer Elektrohängebahn oder eine Fahrschiene einer Elektrobodenbahn sein. Sie kann aber auch eine normale Fahrbahn, beispielsweise ein Hallenboden und/oder Etagenboden, sein, auf welcher sich Förderwagen mit eigenem Antrieb entlang bewegen.

Für den Fall, dass der Förderwagen mehrere Antriebsmotoren umfasst, kann selbstverständlich für all diese Antriebsmotoren der Kraftfluss unterbrochen werden.

Vorzugsweise ist vorgesehen, dass die Trenneinrichtung ein passives Betätigungselement umfasst, das angeordnet und dazu eingerichtet ist, von einem komplementären aktiven Betätigungselement am Trennwagen betätigt zu werden. Derartige Betätigungselemente können unabhängig von der Position der Hauptkomponenten der Trenneinrichtung zur Trennung des Kraftflusses in der Nähe der Stirnseiten des Förderwagens bzw. des Trennwagens angeordnet sein, sodass eine entsprechende Interaktion möglich ist.

Vorzugsweise ist vorgesehen, dass das aktive und das passive Betätigungselement mechanisch zusammenarbeiten. Mechanisch realisierte Funktionen sind häufig ausfallsicherer als elektrisch realisierte Funktionen.

Vorzugsweise kann die Betätigung durch Position- und/oder Lageänderung des passiven Betätigungselements erfolgen, z.B. durch Schwenken eines Hebels.

Dabei können auch Übertragungselemente wie Stangen, Hebel, Seile und/oder Bowdenzüge zum Einsatz kommen, welche die Positions- und/oder Lageänderung auf die Trenneinrichtung übertragen. Die Trenneinrichtung kann so dennoch an von vorne und hinten schlecht zugänglichen Positionen am Förderwagen angeordnet sein. Dabei können Übersetzungen und/oder Untersetzungen vorgesehen werden.

Auch eine Richtungsumkehr der Bewegung des passiven Betätigungselements zur Wirkung auf die Trenneinrichtung ist möglich.

Schließlich sollten bei der mechanischen Betätigung vorzugsweise die erforderlichen Betätigungskräfte kleiner als der Gleitwiderstand des stehenden Förderwagens sein.

Vorzugsweise ist vorgesehen, dass die Trenneinrichtung einen elektrischen Stellantrieb umfasst, um den Kraftfluss zu trennen, und der Förderwagen elektrische Verbindungselemente aufweist, die von komplementären elektrischen Verbindungselementen an dem Trennwagen gespeist werden. Eine elektrische Verbindung zwischen dem liegengebliebenen Förderwagen und dem Trennwagen lässt sich einfach realisieren.

Ähnlich können gegebenenfalls vorhandene, elektrisch zu entriegelnden Notbremsen deaktiviert werden, um die Bewegung des Förderwagens freizugeben.

Vorzugsweise ist vorgesehen, dass die Trenneinrichtung eine schaltbare Kupplung ist, mit welcher der Kraftfluss zwischen dem Antriebsmotor und einem Antriebsrad getrennt wird, das an der Förderstrecke anliegt.

Grundsätzlich kann die Trenneinrichtung in beliebiger Weise den Kraftfluss zwischen dem Antriebsmotor und der Förderstrecke trennen. Beispielsweise kann die Trenneinrichtung über eine Mechanik das Antriebsrad von der Förderstrecke abheben oder Antriebszahnräder können aus dem Eingriff an einer Zahnstange befreit werden. Besonders einfach ist jedoch eine schaltbare Kupplung. Diese kann insbesondere Teil eines häufig ohnehin vorhandenen Getriebes sein.

Vorzugsweise ist vorgesehen, dass der Trennwagen ein weiterer Förderwagen ist. Dadurch können die Förderwagen zugleich mit einer Trenneinrichtung und entsprechenden aktiven und passiven Betätigungselementen ausgestattet sein. Ein liegengebliebener Förderwagen kann so von einem direkt nachfolgenden oder vorauslaufenden Förderwagen aus einem schwerer zugänglichen Förderstreckenabschnitt entfernt werden.

Vorzugsweise kann ein Förderwagen sowohl mit aktiven als auch mit passiven Betätigungselement ausgestattet sein. Dadurch können die Förderwagen alle vom gleichen Typ sein. Viele der nachfolgenden Weiterbildungen der Erfindung sind gerade durch das gleichzeitige Ausbilden der Förderwagen als Trennwagen besonders vorteilhaft.

Die Betätigungselemente können darüber hinaus an den Stirnseiten des Förderwagens angeordnet sein und derart komplementär zueinander sein, dass die Betätigungselemente sich wechselseitig an einem entsprechend nachfolgenden oder vorauslaufenden Förderwagen betätigen lassen.

Dazu kann vorteilhaft ein Blockademechanismus vorgesehen sein, der an einem als Trennwagen genutzten Förderwagen (d.h. an einem noch normal betreibbaren Förderwagen) die passive Betätigbarkeit der Trenneinrichtung blockiert. Dies kann beispielsweise über einen elektrisch betätigten Federbolzen realisiert werden, der die Blockade bei einer Störung am Förderwagen selbsttätig außer Funktion setzt.

Eine andere Möglichkeit sind unabhängig voneinander wirkende aktive und passive Betätigungselemente an den beiden Stirnseiten des Förderwagens.

Vorzugsweise ist vorgesehen, dass zum Trennen des Kraftflusses der Trennwagen näher an den Förderwagen herangebracht wird als dies in einem Normalfahrbetrieb der Fall ist.

Dies kann über die Anlagensteuerung durch eine Annäherungsfahrsignalvorgabe an den Trennwagen erfolgen. Vorzugsweise erfolgt die Annäherung dabei mit einer dynamischen Geschwindigkeitsanpassung in Abhängigkeit vom Abstand der Förderwagen zueinander.

Vorzugsweise ist vorgesehen, dass der Antrieb mehrere Trenneinrichtungen umfasst und sämtliche dieser Trenneinrichtungen zugleich von dem Trennwagen aktiviert werden. Vorteilhaft sind die Trenneinrichtung dazu miteinander beispielsweise über Stangen, Hebel, Seile und/oder Bowdenzüge verbunden.

Vorzugsweise ist vorgesehen, dass der Trennwagen eine Abschlepp- und/oder Anschubeinrichtung aufweist, mit welcher unter gleichzeitiger Aktivierung der Trenneinrichtung des Förderwagens der Förderwagen abgeschleppt bzw. angeschoben werden kann.

Vorzugsweise greift die Abschlepp- und/oder Anschubeinrichtung an von dem passiven Betätigungselement verschiedenen Bauteilen des Förderwagens an. Ferner kann die Abschlepp- und/oder Anschubeinrichtung eine Schubfläche aufweisen, die entsprechende Druckkräfte auf den Förderwagen ausübt. Die Druckkräfte können dann auch in Bögen der Förderstrecke ohne Formschluss wirken. Zugkräfte lassen sich hingegen durch entsprechende formschlüssige oder elektromagnetische Koppelelemente übertragen.

Vorzugsweise werden mehrere Trennwagen zum Abschleppen bzw. Anschieben verwendet, falls die Antriebskraft eines Trennwagens nicht ausreicht. Dabei können ein Trennwagen von vorne und ein Trennwagen von hinten an den Förderwagen ankoppeln.

Vorzugsweise ist vorgesehen, dass der Trennwagen einen Signalgeber aufweist, der eine erfolgreiche Aktivierung der Trenneinrichtung des Förderwagens an eine Steuerung signalisiert. Beispielsweise kann die Lage des passiven Betätigungselements am Förderwagen vom Trennwagen aus erfasst werden. Allerdings kann auch eine entsprechende elektrische Schnittstelle zwischen Förderwagen und Trennwagen vorgesehen sein.

Hinsichtlich des Förderwagens wird die Aufgabe durch einen Förderwagen gelöst, der einen eigenen Antrieb mitführt und mit diesem entlang einer Förderstrecke bewegbar ist, wobei der Antrieb
a) einen Antriebsmotor, und
b) eine Trenneinrichtung umfasst, mit welcher sich der Kraftfluss zwischen dem Antriebsmotor und der Förderstrecke trennen lässt,
   Erfindungsgemäß ist dabei
c) die Trenneinrichtung dazu eingerichtet ist, von einem dem Förderwagen entlang der Förderstrecke nachfolgenden und/oder einem dem Förderwagen entlang der Förderstrecke vorauslaufenden Trennwagen aktiviert zu werden, um den Kraftfluss zwischen dem Antriebsmotor des mindestens einen Förderwagens und der Förderstrecke zu trennen

Hinsichtlich des Verfahrens wird die Aufgabe durch Verfahren mit folgenden Schritten gelöst:
a) Heranfahren des Trennwagens an den Förderwagen;
b) Trennen des Kraftflusses zwischen Antriebsmotor und Förderstrecke mit Hilfe des Trennwagens;
c) Herausfahren des Förderwagens aus dem schwer zugänglichen Förderstreckenabschnitt.

Die oben genannten Erfindungsgedanken sind nicht darauf beschränkt, die Trenneinrichtung an dem Förderwagen nur in einem Störungsfall einzusetzen. Beispielsweise kann die Trenneinrichtung auch dazu verwendet werden, Gespanne aus mehreren Förderwagen zu bilden, von welchen nur einer angetrieben wird. Dies kann beispielsweise in Pufferbereichen von Interesse sein.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine Seitenansicht einer erfindungsgemäßen Förderanlage mit einer Fahrschiene und mehreren Förderwagen;
- Figur 2: einen Querschnitt durch einen Trocknerabschnitt der Förderstrecke;
- Figur 3: eine Seitenansicht eines Förderwagens der Förderanlage mit einer Trenneinrichtung in einem ersten Zustand, in welchem zwischen einem Antriebsmotor und einem Antriebsrad der Kraftfluss geschlossen ist;
- Figur 4: eine Seitenansicht eines Förderwagens der Förderanlage mit einer Trenneinrichtung in einem zweiten Zustand, in welchem zwischen dem Antriebsmotor und einem Antriebsrad der Kraftfluss getrennt ist;
- Figur 5: eine Seitenansicht zweier Förderwagen, die derart aufeinander aufgefahren sind, dass der nachfolgende Förderwagen die Trenneinrichtung des vorausfahrenden Förderwagens aktiviert, um den Kraftfluss zu trennen;
- Figuren 6a-c: eine schematische Zusammenstellung dreier Zustände von abgewandelten Förderwagen, deren Trenneinrichtung dazu eingerichtet ist, beidseitig aktiviert zu werden bzw. zu aktivieren.

### BESCHREIBUNG BEVORZUGTER AUSFÜHRUNGSBEISPIELE

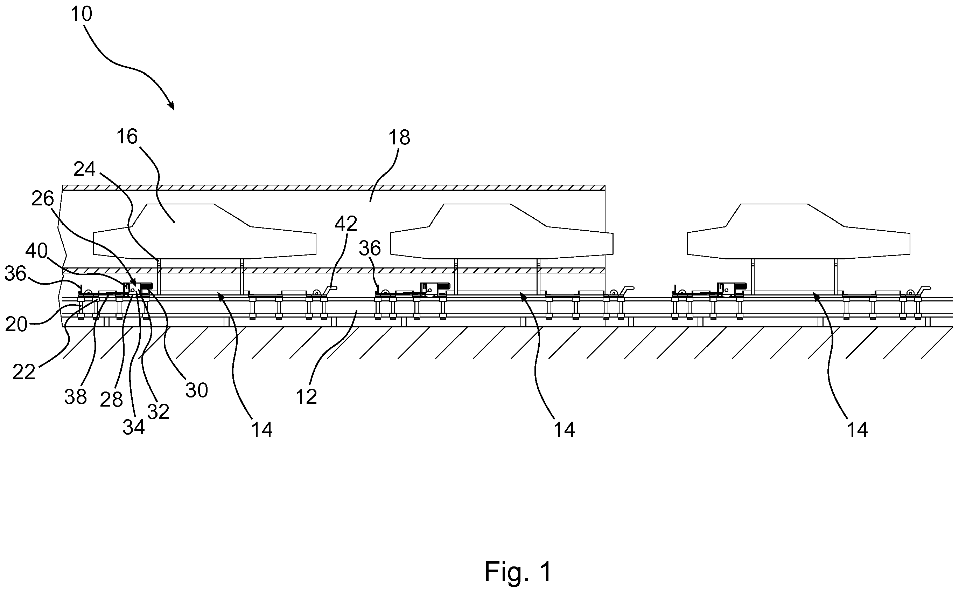

Figur 1 zeigt eine insgesamt mit 10 bezeichnete Förderanlage, hier in Form einer Einschienen-Elektrobodenbahn.

Die Förderanlage 10 weist eine Fahrschiene 12 auf, welche die Förderstrecke vorgibt, entlang welcher sich mehrere Förderwagen 14 bewegen können, die hier beispielhaft eine Fahrzeugkarosserie 16 oder Teile davon transportieren.

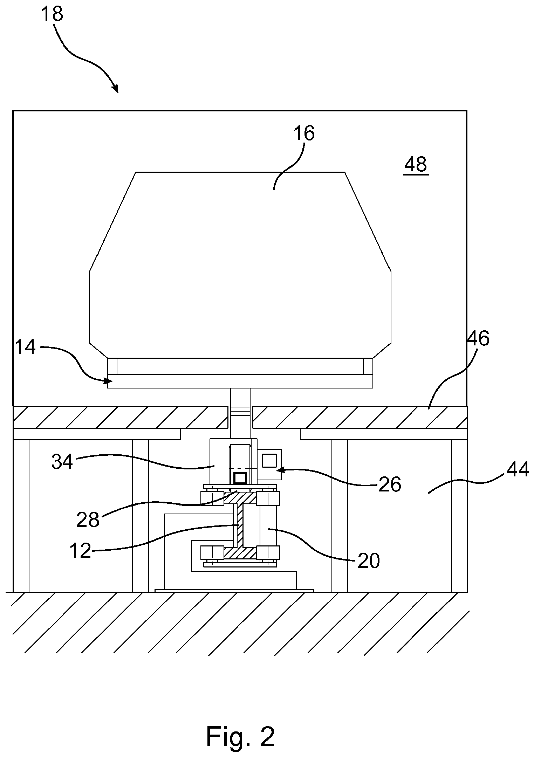

Die Förderanlage 10 weist einen Trockner 18 als Beispiel für einen schwer zugänglichen Abschnitt der Förderstrecke auf. Details hierzu werden unten unter Bezug auf Figur 2 erläutert.

Jeder Förderwagen 14 weist ein Fahrwerk 20 mit frei mitlaufenden Seitenrädern 22 auf, welche an der Fahrschiene 12 anliegen. Auf dem Fahrwerk 20 stützt sich ein Bauteilträger 24 ab, welcher die Fahrzeugkarosserie 16 oberhalb der Fahrschiene 12 trägt.

Jeder Förderwagen 14 weist ferner einen eigenen, mitgeführten Antrieb 26 auf. Dieser umfasst ein Antriebsrad 28 und einen Antriebsmotor 30, der typischerweise als Elektromotor ausgebildet ist und über nicht gezeigte Steuer- und Versorgungschleifschienen mit Strom versorgt wird. Es können jedoch auch batteriebetriebene Antriebsmotoren 30 zum Einsatz kommen.

Das Antriebsrad 28, welches die Bewegung des Förderwagens 14 bewirkt, und der Antriebsmotor 30 sind über ein Getriebe 32 verbunden.

Hierfür werden meist Schneckengetriebe verwendet, die selbsthemmend gegen Eigenbewegungen des Förderwagens 14 entlang der Förderstrecke (beispielsweise in Steigungsbereichen der Förderstrecke) wirken, wenn der Antriebsmotor 30 nicht arbeitet. Teilweise kann der Antrieb 30 auch elektrisch zu entriegelnde Blockierbremsen aufweisen, um derartige Eigenbewegungen zuverlässig auch bei Stromausfall zu verhindern.

Zusätzlich zum Getriebe 32 oder als Teil davon weist der Antrieb 26 eine Trenneinrichtung 34 hier in Form einer nicht näher dargestellten Kupplung auf, mit welcher sich der Kraftfluss zwischen dem Antriebsmotor 30 und der Förderstrecke, d.h. hier der Fahrschiene 12, schließen oder trennen lässt, damit der Förderwagen 14 bei einer Störung durch äußere Krafteinwirkung frei bewegt werden kann.

Die Trenneinrichtung 34 weist ein passives Betätigungselement 36 auf, das hier am hinteren Ende des Förderwagens 14 angeordnet ist und über einen Bowdenzug 38 auf einen Kupplungshebel 40 der Trenneinrichtung 34 wirkt.

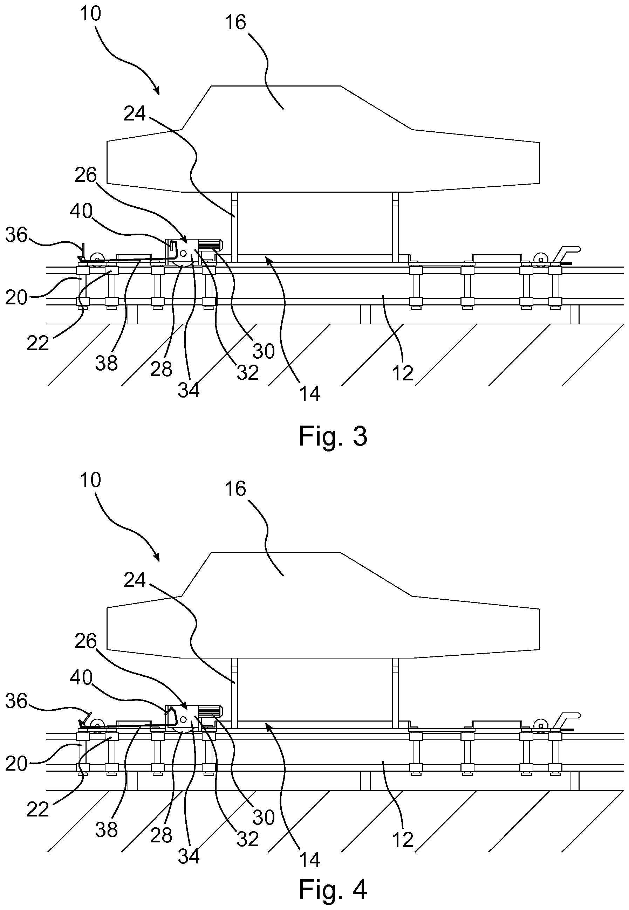

In Figur 3 ist der Förderwagen 14 in einem Zustand gezeigt, in welchem das passive Betätigungselement 36 hier beispielhaft als Kipphebel so ausgebildet ist, dass es gerade nach oben zeigt während der Kraftfluss zwischen Antriebsmotor 30 und Antriebsrad 28 hergestellt ist.

Am hier vorderen Ende des Förderwagens 14 ist hingegen ein komplementäres aktives Betätigungselement 42 (hier in Form einer nach vorne herausragenden Stange, auch ein Aktuator mit einer ausfahrbaren Stange ist denkbar) derart angeordnet, dass es bei einem ausreichend kleinen Abstand zwischen zwei Förderwagen 14 durch Auffahren des hinteren Förderwagens 14 auf den vorausfahrenden Förderwagen 14 das dort angeordnete passive Betätigungselement 36 betätigt.

Das aktive Betätigungselement 42 drückt dabei mechanisch auf das passive Betätigungselement 36 und klappt dieses um, wodurch sich der Bowdenzug 38 und damit auch der Kupplungshebel 40 bewegt. Dieser Zustand ist in Figur 4 gezeigt.

Die Förderanlage 10 arbeitet wie folgt:
Wie aus Figur 2 ersichtlich ist im Trocknerabschnitt 18 der Förderstrecke das Fahrwerk 20 der Förderwagen 14 zusammen mit der Fahrschiene 12 in einem durch einen Zwischenboden 46 vom eigentlichen Trocknertunnel 48 abgegrenzten Fahrraum 44 angeordnet. Bleibt dort ein Förderwagen 14 liegen, ist die Trenneinrichtung 34 für eine manuelle Betätigung schwer zugänglich.

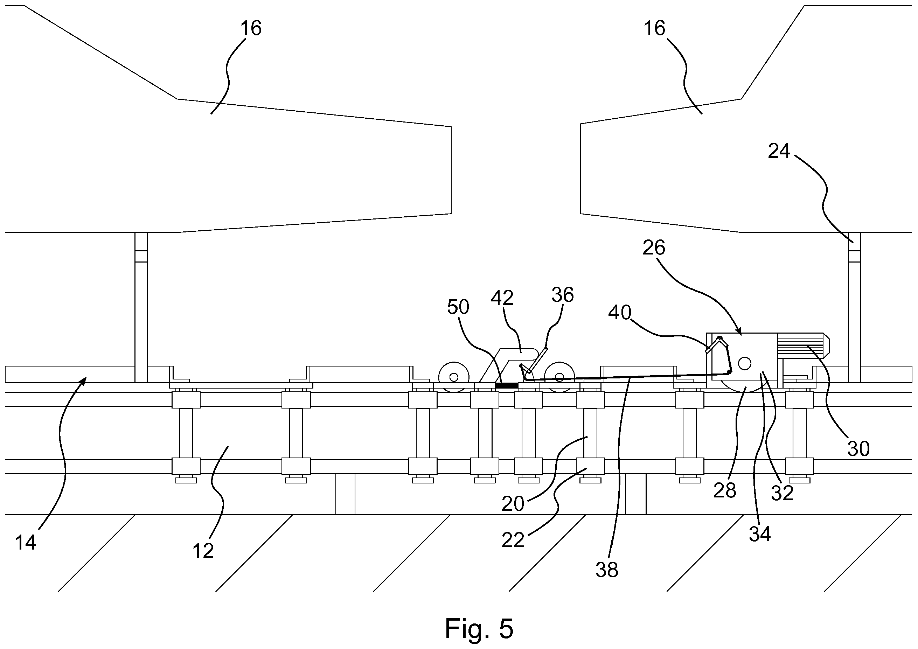

Daher wird nun über eine nicht gezeigte Anlagensteuerung, wie in Figur 5 gezeigt, der nachfolgende Förderwagen 14 dichter an den liegengebliebenen Förderwagen 14 herangefahren, sodass der Abstand der beiden aufeinanderfolgenden Förderwagen 14 gegenüber einem Normalbetrieb verringert wird.

Dabei betätigt das aktive Betätigungselement 42 des nachfolgenden Förderwagens 14 das passive Betätigungselement 36 und die Trenneinrichtung 34 wird aktiviert, um den Kraftfluss zu unterbrechen. Der liegengebliebene Förderwagen 14 ist nun frei beweglich.

Der nachfolgende Förderwagen 14 wird solange weiter an den liegengebliebenen Förderwagen 14 heranbewegt bis ein Schubgummipuffer 50 als Abschlepp- und Anschubeinrichtung Kontakt mit dem liegengebliebenen Förderwagen aufgenommen hat. Auf diese Weise kann der nachfolgende Förderwagen 14 nun den liegengebliebenen Förderwagen 14 aus dem schwer zugänglichen Trocknerabschnitt 18 heraus schieben.

Die Anlagensteuerung kann dann das Doppelgespann auf einen Wartungsabschnitt der Förderstrecke umleiten, sodass die übrige Förderanlage 10 wieder vollständig in den Normalbetrieb übergehen kann. Alternativ können auch defekte Komponenten an einem gut zugänglichen Streckenabschnitt vom Wartungspersonal getauscht werden.

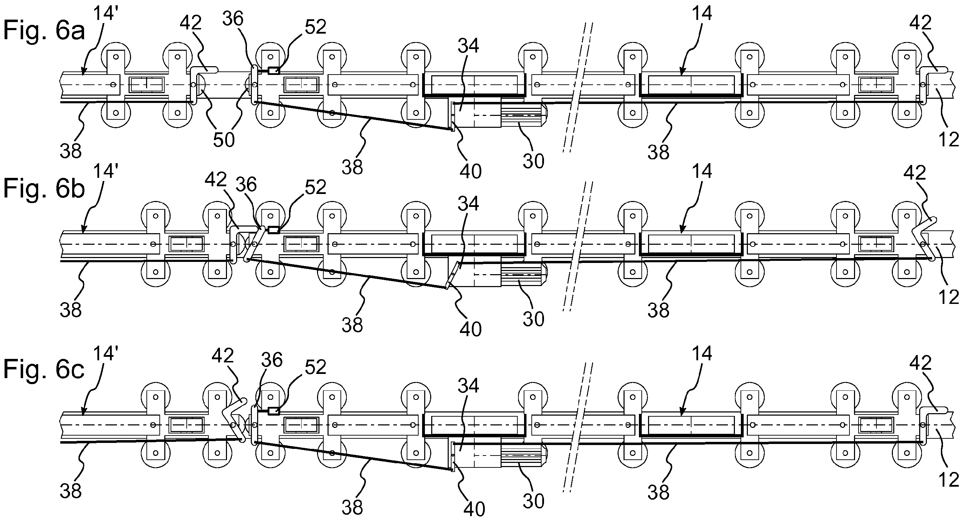

In den Figuren 6a, 6b und 6c ist der für die Erfindung relevante Fahrwerksausschnitt eines abgewandelten Förderwagens 14 in drei unterschiedlichen Situationen als Aufsicht von oben auf die Fahrschiene 12 gezeigt. Gleichartige oder gleichwirkende Komponenten sind mit denselben Bezugszeichen versehen.

Hier umfasst die Trenneinrichtung 34 sowohl hinten ein Betätigungselement 36 als auch vorne ein Betätigungselement 42, die beide über Gelenkstangen 38 mit dem Kupplungshebel 40 der Trenneinrichtung 34 verbunden sind.

Wie nachfolgend deutlich wird, können bei dieser Abwandlung die Betätigungselemente 36, 42 sowohl aktiv als auch passiv wirken, d.h. betätigen bzw. betätigt werden.

Am Betätigungselement 36 ist ein elektrisch zu entriegelnder Federriegel 52 vorgesehen, welcher im Normalbetrieb eine äußere Betätigung des Betätigungselements verhindert (Figur 6a).

In Figur 6b ist nun eine Situation gezeigt, in welcher der rechts gezeigte Förderwagen 14 liegengeblieben ist. Daraufhin wurde der links gezeigte Förderwagen 14' herangefahren und dessen Betätigungselement 42 arbeitet als aktives Betätigungselement 42 und betätigt das Betätigungselement 36 des liegengebliebenen Förderwagens 14. Ein Kippen des Betätigungselements 36 ist möglich, da aufgrund der Störung der Federriegel 52 entsperrt und eine äußere Betätigung der Trenneinrichtung 34 erlaubt.

In Figur 6c ist hingegen der links gezeigte Förderwagen 14' liegengeblieben. In diesem Fall steht der Federriegel 52 des rechts gezeigten Förderwagens 14 weiterhin unter Strom und verhindert eine Kippbewegung des Betätigungselements 36. Daher kann dieses nun beim Heranfahren von rechts auf das Betätigungselement 42 des links gezeigten Förderwagens 14' eine Kraft ausüben und dieses betätigen.

Die aktiven und passiven Rollen der Betätigungselemente 36, 42 sind somit vertauscht.

Auf diese Weise lassen sich durch einfache mechanische Mittel die Trenneinrichtungen 34 der Förderwagen 14, 14' sowohl von vorne als auch von hinten aktivieren.

## Patentansprüche

1. Förderanlage (10) mit
a) einer Förderstrecke (12) und
b) mindestens einem Förderwagen (14, 14'), der einen eigenen Antrieb (26) mitführt und mit diesem entlang der Förderstrecke (12) bewegbar ist, wobei der Antrieb (26)
- einen Antriebsmotor (30), und
- eine Trenneinrichtung (34) umfasst, mit welcher sich der Kraftfluss zwischen dem Antriebsmotor (30) und der Förderstrecke (12) trennen lässt,
**dadurch gekennzeichnet, dass**
c) die Trenneinrichtung (34) dazu eingerichtet ist, von einem dem Förderwagen (14, 14') entlang der Förderstrecke (12) nachfolgenden und/oder einem dem Förderwagen (14, 14') entlang der Förderstrecke (12) vorauslaufenden Trennwagen (14, 14') aktiviert zu werden, um den Kraftfluss zwischen dem Antriebsmotor (30) des mindestens einen Förderwagens (14, 14') und der Förderstrecke (12) zu trennen.

2. Förderanlage nach einem der vorhergehenden Ansprüche, **dadurch gekennzeichnet, dass** die Trenneinrichtung (34) ein passives Betätigungselement (36) umfasst, dass angeordnet und dazu eingerichtet ist, von einem komplementären aktiven Betätigungselement (42) am Trennwagen (14, 14') betätigt zu werden.

3. Förderanlage nach Anspruch 2, **dadurch gekennzeichnet, dass** das aktive und das passive Betätigungselement (36, 42) mechanisch zusammenarbeiten.

4. Förderanlage nach einem der vorhergehenden Ansprüche, **dadurch gekennzeichnet, dass** die Trenneinrichtung (34) einen elektrischen Stellantrieb umfasst, um den Kraftfluss zu trennen, und der Förderwagen (14, 14') elektrische Verbindungselemente aufweist, die von komplementären elektrischen Verbindungselementen an dem Trennwagen (14, 14') gespeist werden.

5. Förderanlage nach einem der vorhergehenden Ansprüche, **dadurch gekennzeichnet, dass** die Trenneinrichtung (34) eine schaltbare Kupplung ist, mit welcher der Kraftfluss zwischen dem Antriebsmotor (30) und einem Antriebsrad (28) getrennt wird, das an der Förderstrecke (12) anliegt.

6. Förderanlage nach einem der vorhergehenden Ansprüche, **dadurch gekennzeichnet, dass** der Trennwagen (14, 14') ein weiterer Förderwagen (14, 14') ist.

7. Förderanlage nach einem der vorhergehenden Ansprüche, **dadurch gekennzeichnet, dass** der Trennwagen (14, 14') dazu eingerichtet ist, zum Trennen des Kraftflusses näher an den Förderwagen (14, 14') herangebracht zu werden als dies in einem Normalfahrbetrieb der Fall ist.

8. Förderanlage nach einem der vorhergehenden Ansprüche, **dadurch gekennzeichnet, dass** der Antrieb (26) mehrere Trenneinrichtungen (34) umfasst und sämtliche dieser Trenneinrichtungen (34) zugleich von dem Trennwagen (14, 14') aktiviert werden.

9. Förderanlage nach einem der vorhergehenden Ansprüche, **dadurch gekennzeichnet, dass** der Trennwagen (14, 14') eine Abschlepp- und/oder Anschubeinrichtung (50) aufweist, mit welcher unter gleichzeitiger Aktivierung der Trenneinrichtung (34) des Förderwagens (14, 14') der Förderwagen (14, 14') abgeschleppt bzw. angeschoben werden kann.

10. Förderanlage nach einem der vorhergehenden Ansprüche, **dadurch gekennzeichnet, dass** der Trennwagen (14) einen Signalgeber aufweist, der eine erfolgreiche Aktivierung der Trenneinrichtung (34) des Förderwagens (14, 14') an eine Steuerung signalisiert.

11. Förderwagen (14, 14'), der einen eigenen Antrieb (26) mitführt und mit diesem entlang einer Förderstrecke (12) bewegbar ist, wobei der Antrieb (26)
a) einen Antriebsmotor (30), und
b) eine Trenneinrichtung (34) umfasst, mit welcher sich der Kraftfluss zwischen dem Antriebsmotor (30) und der Förderstrecke (12) trennen lässt,
**dadurch gekennzeichnet, dass**
c) die Trenneinrichtung (34) dazu eingerichtet ist, von einem dem Förderwagen (14, 14') entlang der Förderstrecke (12) nachfolgenden und/oder einem dem Förderwagen (14, 14') entlang der Förderstrecke (12) vorauslaufenden Trennwagen (14, 14') aktiviert zu werden, um den Kraftfluss zwischen dem Antriebsmotor (30) des mindestens einen Förderwagens (14, 14') und der Förderstrecke (12) zu trennen

12. Verfahren zum Entfernen eines liegengebliebenen Förderwagens (14, 14') aus einem schwer zugänglichen Förderstreckenabschnitt (18) einer Förderanlage (10) nach einem der Ansprüche 1 bis 10, mit folgenden Schritten:
a) Heranfahren des Trennwagens (14, 14') an den Förderwagen (14, 14');
b) Trennen des Kraftflusses zwischen Antriebsmotor (30) und Förderstrecke (12) mit Hilfe des Trennwagens (14, 14');
c) Herausfahren des Förderwagens (14, 14') aus dem schwer zugänglichen Förderstreckenabschnitt (18).

## Claims

1. A conveyor system (10) having:
a) a conveyor path (12) and
b) at least one conveyor carriage (14, 14') which carries an individual drive (26) and which can be moved therewith along the conveyor path (12), wherein the drive (26) comprises
- a drive motor (30) and
- a separation device (34), by means of which the force path between the drive motor (30) and the conveyor path (12) can be separated,
**characterized in that**
c) the separation device (34) is configured to be activated by means of a separation carriage (14, 14') which follows the conveyor carriage (14, 14') along the conveyor path (12) and/or a separation carriage (14, 14') which precedes the conveyor carriage (14, 14') along the conveyor path (12) in order to separate the force path between the drive motor (30) of the at least one conveyor carriage (14, 14') and the conveyor path (12).

2. The conveyor system as claimed in the preceding claim, **characterized in that** the separation device (34) comprises a passive activation element (36) which is arranged and configured to be activated by a complementary active activation element (42) on the separation carriage (14, 14').

3. The conveyor system as claimed in claim 2, **characterized in that** the active and the passive activation elements (36, 42) cooperate mechanically.

4. The conveyor system as claimed in one of the preceding claims, **characterized in that** the separation device (34) comprises an electrical actuation drive in order to separate the force path and the conveyor carriage (14, 14') has electrical connection elements which are supplied with electric power by means of complementary electrical connection elements on the separation carriage (14, 14').

5. The conveyor system as claimed in one of the preceding claims, **characterized in that** the separation device (34) is a switchable coupling, by means of which the force path between the drive motor (30) and a drive wheel (28) which bears on the conveyor path (12) is separated.

6. The conveyor system as claimed in one of the preceding claims, **characterized in that** the separation carriage (14, 14') is another conveyor carriage (14, 14').

7. The conveyor system as claimed in one of the preceding claims, **characterized in that**, in order to separate the force path, the separation carriage (14, 14') is configured to be moved closer to the conveyor carriage (14, 14') than is the case during normal travel operation.

8. The conveyor system as claimed in one of the preceding claims, **characterized in that** the drive (26) comprises a plurality of separation devices (34) and all these separation devices (34) are activated at the same time by the separation carriage (14, 14').

9. The conveyor system as claimed in one of the preceding claims, **characterized in that** the separation carriage (14, 14') has a towing and/or pushing device (50) by means of which the conveyor carriage (14, 14') can be towed away or pushed with the separation device (34) of the conveyor carriage (14, 14') being activated at the same time.

10. The conveyor system as claimed in one of the preceding claims, **characterized in that** the separation carriage (14) has a signal transmitter which signals successful activation of the separation device (34) of the conveyor carriage (14, 14') to a control unit.

11. A conveyor carriage (14, 14') which carries an individual drive (26) and which can be moved therewith along a conveyor path (12), wherein the drive (26) comprises
a) a drive motor (30) and
b) a separation device (34), by means of which the force path between the drive motor (30) and the conveyor path (12) can be separated,
**characterized in that**
c) the separation device (34) is configured to be activated by a separation carriage (14, 14') which follows the conveyor carriage (14, 14') along the conveyor path (12) and/or a separation carriage (14, 14') which precedes the conveyor carriage (14, 14') along the conveyor path (12) in order to separate the force path between the drive motor (30) of the at least one conveyor carriage (14, 14') and the conveyor path (12).

12. A method for removing a conveyor carriage (14, 14') which has come to a standstill from a poorly accessible conveyor path portion (18) of a conveyor system (10) as claimed in claims 1 to 10, having the following steps:
a) moving the separation carriage (14, 14') toward the conveyor carriage (14, 14');
b) separating the force path between the drive motor (30) and conveyor path (12) using the separation carriage (14, 14');
c) moving the conveyor carriage (14, 14') out of the poorly accessible conveyor path portion (18).

## Revendications

1. Installation de convoyage (10) comportant :
a) une voie de convoyage (12) et
b) au moins un chariot de convoyage (14, 14'), qui transporte son propre entraînement (26), et peut être déplacé avec ce dernier le long de la voie de convoyage (12), dans lequel l'entraînement (26) comporte
- un moteur d'entraînement (30), et
- un dispositif de coupure (34), avec lequel le flux de force entre le moteur d'entraînement (30) et la voie de convoyage (12) peut être coupé,
**caractérisé en ce que**
c) le dispositif de coupure (34) est conçu pour être activé par un chariot de coupure (14, 14') suivant le chariot de convoyage (14, 14') le long de la voie de convoyage (12), et / ou par un chariot de coupure (14, 14') précédant le chariot de convoyage (14, 14') le long de la voie de convoyage (12), afin de couper le flux de force entre le moteur d'entraînement (30) de l'au moins un chariot de convoyage (14, 14') et la voie de convoyage (12).

2. Installation de convoyage selon l'une quelconque des revendications, **caractérisé en ce que** le dispositif de coupure (34) comporte un élément d'actionnement passif (36), qui est agencé et adapté pour être actionné par un élément d'actionnement actif complémentaire (42) au chariot de coupure (14, 14').

3. Installation de convoyage selon la revendication 2, **caractérisé en ce que** l'élément d'actionnement actif et passif (36, 42) coopèrent mécaniquement.

4. Installation de convoyage selon l'une quelconque des revendications précédentes, **caractérisé en ce que** le dispositif de coupure (34) comporte un actionneur électrique pour couper le flux de force, et le chariot de convoyage (14, 14') comporte des éléments de raccordement électrique, qui sont alimentés par des éléments complémentaires de raccordement électrique au chariot de coupure (14, 14').

5. Installation de convoyage selon l'une quelconque des revendications précédentes, **caractérisé en ce que** le dispositif de coupure (34) est un embrayage, avec lequel le flux de force entre le moteur d'entraînement (30) et un roue d'entraînement (28) est coupé, qui est appliqué à la voie de convoyage (12).

6. Installation de convoyage selon l'une quelconque des revendications précédentes, **caractérisé en ce que** le chariot de coupure (14, 14') est un autre chariot de convoyage (14, 14').

7. Installation de convoyage selon l'une quelconque des revendications précédentes, **caractérisé en ce que** le chariot de coupure (14, 14') est conçu pour être approché plus près au chariot de convoyage (14, 14') que dans le cas d'un fonctionnement normal, pour couper le flux de force.

8. Installation de convoyage selon l'une quelconque des revendications précédentes, **caractérisé en ce que** l'entraînement (26) comporte plusieurs dispositifs de coupure (34), et tous ces dispositifs de coupure (34) sont activés en même temps par le chariot de coupure (14, 14').

9. Installation de convoyage selon l'une quelconque des revendications précédentes, **caractérisé en ce que** le chariot de coupure (14, 14') comporte un dispositif de remorquage et / ou de poussage (50), avec lequel le chariot de convoyage (14, 14') peut être remorqué et / ou poussé en activant le dispositif de coupure (34) du chariot de convoyage (14, 14') en même temps.

10. Installation de convoyage (10) selon l'une quelconque des revendications précédentes, **caractérisé en ce que** le chariot de coupure (14, 14') comporte un poste transmetteur de signaux, qui signale à un système de commande la bonne activation du dispositif de coupure (34) du chariot de convoyage (14, 14').

11. Chariot de convoyage (14, 14'), qui transporte son propre entraînement (26), et peut être déplacé avec celui-ci le long de la voie de convoyage (12), dans lequel l'entraînement (26) comporte
a) un moteur d'entraînement (30), et
b) un dispositif de coupure (34), avec lequel le flux de force entre le moteur d'entraînement (30) et la voie de convoyage (12) peut être coupé,
**caractérisé en ce que**
c) le dispositif de coupure (34) est conçu pour être activé par un chariot de coupure (14, 14') suivant le chariot de convoyage (14) le long de la voie convoyage (12), et / ou par un chariot de coupure (14, 14') précédant le chariot de convoyage (14) le long de la voie de convoyage (12), afin de couper le flux de force entre le moteur d'entraînement (30) de l'au moins un chariot de convoyage (14, 14') et la voie de convoyage (12).

12. Procédé pour éliminer un chariot de convoyage (14, 14') étant en panne à partir d'un tronçon de voie de convoyage (18) d'accès difficile d'une installation de convoyage (10) selon l'une quelconque des revendications 1 à 10, comportant les étapes suivantes :
a) Approcher le chariot de coupure (14, 14') au chariot de convoyage (14, 14');
b) Couper le flux de force entre le moteur d'entraînement (30) et la voie de convoyage (12) par l'intermédiaire du chariot de coupure (14, 14');
c) Sortir le chariot de convoyage (14, 14') du tronçon de voie de convoyage (18) d'accès difficile.
